# EUROPÄISCHE PATENTSCHRIFT

(11) **EP 4 130 897 B1**
(45) Veröffentlichungstag und Bekanntmachung des Hinweises auf die Patenterteilung: **26.11.2025**
(21) Anmeldenummer: 21189118.9
(22) Anmeldetag: 02.08.2021
(51) Int. Cl.: G05B 19/042

(54) **VERFAHREN ZUR PARAMETRIERUNG EINES FELDGERÄTS FÜR EINEN VERBINDUNGSAUFBAU**
METHOD FOR CONFIGURING THE PARAMETERS OF A FIELD DEVICE FOR ESTABLISHING A CONNECTION
PROCÉDÉ DE PARAMÉTRAGE D'UN APPAREIL DE TERRAIN POUR UN ÉTABLISSEMENT DE LA CONNEXION

(43) Veröffentlichungstag der Anmeldung: 08.02.2023
(73) Patentinhaber: VEGA Grieshaber KG, 77709 Wolfach (DE)
(72) Erfinder: METZGER, Manfred, 77716 Haslach im Kinzigtal (DE); HOFERER, Christian, 77652 Offenburg (DE); FEHRENBACH, Dominik, 78628 Rottweil (DE)
(74) Vertreter: Maiwald GmbH

(56) Entgegenhaltungen:
- DE-A1- 102013 216 501
- DE-A1- 102017 104 912
- US-A1- 2021 195 392

## Beschreibung

### Technisches Gebiet

Die Erfindung betrifft ein Feldgerät, ein Verfahren zur Parametrierung eines Feldgeräts für einen Verbindungsaufbau, und eine Verwendung einer ersten Chipkarte und einer zweiten Chipkarte in einem Feldgerät zum Aufbau einer Verbindung zu einem loT-Dienst.

### Stand der Technik

Industrielle Sensoren oder Feldgeräte können eine intern verbaute SIM Karte aufweisen. Diese SIM Karte ist auf die entsprechende Gegenstelle (Cloud-Dienst) eingestellt und damit nicht von einem Nutzer anpassbar.

Die US 2021/195392 A1 zeigt ein Gerät mit mehreren SIMs, wobei eventuell die zweite SIM ausgewählt wird, wenn die erste SIM vorbestimmte Bedingungen nicht erfüllt.

Die DE 10 2017 104912 A1 zeigt Feldgeräte mit einem SIM-Kartenslot für einen zweiten Kommunikationskanal.

Die DE 10 2013 21650 A1 zeigt Feldgeräte mit einer lösbaren oder steckbaren Netzwerkmerkmalträgereinrichtung, w. z. B. einer SiM-Karte.

### Offenbarung der Erfindung

Eine Aufgabe der Erfindung könnte sein, eine verbessertes Feldgerät hinsichtlich der Verbindung zu einem loT-Dienst bereitzustellen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise das Feldgerät, das Verfahren zur Parametrierung eines Feldgeräts für einen Verbindungsaufbau, und die Verwendung einer ersten Chipkarte und einer zweiten Chipkarte in einem Feldgerät zum Aufbau einer Verbindung. Synergieeffekte können sich aus verschiedenen Kombinationen der Ausführungsformen ergeben, obwohl sie möglicherweise nicht im Detail beschrieben werden.

Ferner ist zu beachten, dass alle Ausführungsformen der vorliegenden Erfindung, die ein Verfahren betreffen, in der beschriebenen Reihenfolge der Schritte ausgeführt werden können, jedoch muss dies nicht die einzige und wesentliche Reihenfolge der Schritte des Verfahrens sein. Die hier vorgestellten Verfahren können mit einer anderen Reihenfolge der offenbarten Schritte ausgeführt werden, ohne von der jeweiligen Verfahrensausführungsform abzuweichen, sofern im Folgenden nicht ausdrücklich etwas Anderes angegeben ist.

Gemäß einem ersten Aspekt wird ein Feldgerät, das eine integrierte erste Chipkarte mit einem ersten Parametersatz und eine Schnittstelle zu einer, insbesondere gegebenenfalls austauschbaren, zweiten Chipkarte aufweist, bereitgestellt. Die Schnittstelle ist eingerichtet, eine Verbindung zu einem Cloud-Dienst unter Verwendung des zweiten Parametersatzes aufzubauen, wenn dies gemäß einer Überprüfung möglich ist, und andernfalls eine Verbindung zu einem Cloud-Dienst unter Verwendung des ersten Parametersatzes aufzubauen.

Das Feldgerät kann somit über eine von zwei Chipkarten eine Verbindung zu einem Cloud-Dienst aufbauen, um beispielsweise Feldgeräte-typische Daten, Steuerbefehle, oder Konfigurationen, etc. zu senden bzw. zu empfangen. Um die Verbindung aufzubauen sind z.B. Nutzerdaten bzw. Zugangsdaten wie Adressen, Provider und sog. Credentials, also Zugangsdaten, usw. notwendig, die jeweils als Parametersatz auf den Chipkarten gespeichert sind. Der erste und der zweite Parametersatz können nun gewollt unterschiedlich sein. Das Feldgerät kann dann den zweiten Parametersatz von der zweiten Chipkarte, den ein Benutzer zur Verfügung stellt, für den Verbindungsaufbau bevorzugen. Hierdurch ist es beispielsweise möglich, dass der Benutzer einen für ihn günstigen Tarif nutzen kann. Ferner ist es möglich, dass das Feldgerät aus bestimmten Gründen den zweiten Parametersatz nicht nutzen kann, so dass es die erste Chipkarte bzw. den Parametersatz der ersten Chipkarte für den Verbindungsaufbau verwendet. Hierzu überprüft das Feldgerät, ob ein Verbindungsaufbau möglich ist, oder nicht. Die Überprüfung kann vor dem Verbindungsaufbau und/oder während des Verbindungsaufbaus erfolgen. Die Prüfkriterien bzw. -methoden werden nachfolgend erläutert.

Die Verbindung ist beispielsweise eine IOT-Verbindung zu einem Cloud-Dienst, der auf einem Server in der Cloud eingerichtet ist. Der Cloud-Dienst und der Server sind beispielsweise in einer Anwendung, einer sogenannten "App", auf beispielsweise einem Smartphone, PC, Laptop oder einem sonstigen mit dem Internet verbundenen Gerät implementiert. Eine solche App kann beispielsweise die Sensordaten anzeigen oder den Sensor verwalten. Beispielsweise kann die App durch den dort implementierten loT Cloud-Dienst den Sensor parametrieren.

Bei der integrierten ersten Chipkarte und/oder der zweiten Chipkarte handelt es sich beispielsweise um eine klassische steckbare SIM Karte, eine bestückbare SIM Karte oder eine bestückbare eSIM.

Auch ist eine Kombination möglich, z.B. eine eSIM und eine klassische SIM Karte.

Bei dem Feldgerät handelt es sich beispielsweise um ein Füllstandmessgerät, ein Grenzstandsensor, ein Druckmessgerät oder ein Durchflussmessgerät. Das Feldgerät kann auch ein austauschbares Nachrüstmodul (Zubehörteil) mit zwei SIM-Karten sein, wie beispielsweise ein PLICSCOM-Modul.

Es kann vorgesehen sei, dass das Feldgerät über eine 4-20mA Loop mit Energie versorgt wird. Die Versorgung des Feldgerätes und /oder des Zubehörteils kann sowohl durch interne Batterien, Akkus oder der Stromschleife erfolgen.

Gemäß einer Ausführungsform weist das Feldgerät die zweite Chipkarte auf.

Die Chipkarte kann dabei im Feldgerät eingesteckt sein, so dass die Schnittstelle mechanischen Kontakt zur zweiten Chipkarte hat und galvanisch mit ihr verbunden ist, oder sie ist vom Feldgerät getrennt, aber wird trotzdem als Teil des Feldgeräts definiert. In den Fällen ohne galvanische Verbindung mit der Schnittstelle kann die Verbindung mit dieser auch drahtlos erfolgen, unabhängig davon, ob sie eingesteckt ist, oder nicht.

Gemäß einer Ausführungsform ist der erste Parametersatz zugriffsgeschützt, und der zweite Parametersatz ist von einem Benutzer anpassbar.

In anderen Worten ist der erste Parametersatz ein vorinstallierter Parametersatz, auf den der Benutzer nicht zugreifen kann und ändern kann, wohingegen der zweite Parametersatz ein vom Benutzer dem Feldgerät bereitgestellter Parametersatz. Der Parametersatz bzw. die zweite Chipkarte kann hierbei von einem Netzwerkprovider im Auftrag des Benutzers den Parametersatz zur Verfügung gestellt worden sein.

Der Begriff "anpassbar" ist in diesem Kontext breit zu verstehen. Er bedeutet beispielsweise, dass der zweite Parametersatz dem Feldgerät z.B. durch Einlegen der zweiten Chipkarte in das Feldgerät vom Benutzer zur Verfügung gestellt werden kann und somit die Schnittstelle in die Lage versetzt, diesen Parametersatz zu empfangen, oder dass der zweite Parametersatz verändert werden kann, so dass der zweite Parametersatz ein benutzerdefinierter Parametersatz ist. Unter "Ändern des Parametersatzes" kann sowohl das Ändern der Werte vorgegebener Parameter verstanden werden als auch das Hinzufügen oder Löschen eines Parameters. Der zweite Parametersatz ist über die austauschbare zweite Chipkarte beispielsweise via NFC, Bluetooth und/oder APP von einem Benutzer anpassbar.

Der Benutzer kann somit den zweiten Parametersatz über eine Drahtlosverbindung auf die zweite Chipkarte speichern oder, z.B. indem er sie in einen Kartenslot z.B. eines Mobilfunkgeräts, oder sonstigem Gerät, das schreibend auf die Chipkarte zugreifen kann, einlegt. In beiden Fällen kann eine App bzw. Applikation oder Benutzerprogramm als HMI (human machine interface) dienen.

Gemäß einer Ausführungsform weist das Feldgerät eine Steuereinheit auf, welche dazu eingerichtet ist, den zweiten Parametersatz auf Vollständigkeit und/oder Richtigkeit zu überprüfen, und eine Verbindung zu dem Cloud-Dienst unter Verwendung des zweiten Parametersatzes aufzubauen, wenn die Überprüfung positiv ausgefallen ist, oder unter Verwendung des ersten Parametersatzes, wenn die Überprüfung negativ ausgefallen ist.

Der Parametersatz kann für einen Verbindungsaufbau notwendige und nicht notwendige Parameter beinhalten. Unter "vollständig" wird hier der Mindest-Parametersatz verstanden, der für einen erfolgreichen Verbindungsaufbau notwendig ist. Die Überprüfung der Richtigkeit kann z.B. eine Plausibilitätsprüfung sein oder eine Überprüfung eines gültigen Wertebereichs. Die Vollständigkeit und die Richtigkeit gewährleisten zwar nicht, dass der Verbindungsaufbau tatsächlich erfolgreich sein wird, jedoch sind sie notwendige Bedingungen hierfür. Das Feldgerät wird somit den Verbindungsaufbau mit dem zweiten Parametersatz auf der zweiten Chipkarte starten, wenn diese notwendigen Bedingungen erfüllt sind und mit dem ersten Parametersatz auf der ersten Chipkarte, wenn diese notwendigen Bedingungen nicht erfüllt sind.

Gemäß einer Ausführungsform ist die Steuereinheit eingerichtet, zu überprüfen, ob der Verbindungsaufbau zu dem Cloud-Dienst unter Verwendung des zweiten Parametersatzes erfolgreich war, und die Verbindung unter Verwendung des ersten Parametersatzes aufzubauen, wenn die Überprüfung negativ ausgefallen ist.

Das heißt, dass auf den ersten Parametersatz zurückgegriffen wird, wenn die Verbindung mit dem zweiten Parametersatz nicht erfolgreich war. Der erste Parametersatz ist beispielsweise ein werksseitig vorgegebener Parametersatz, der eine erfolgreiche Verbindung garantiert, falls keine generellen Netzfehler vorhanden sind. Der erste Parametersatz ist daher vorzugsweise geschützt, so dass er nicht vom Nutzer, sondern nur von dafür autorisiertem Personal, z.B. dem Hersteller oder der Vertriebsfirma, verändert werden kann. Somit ist sichergestellt, dass immer eine Verbindung hergestellt werden kann; entweder auf die eine oder auf die andere Weise. Der erste Parametersatz dient sozusagen als Rückfallposition, wenn der zweite Parametersatz nicht für den Verbindungsaufbau funktioniert.

Gemäß einer Ausführungsform ist die Steuereinheit eingerichtet, den ersten Parametersatz mit Parametern des zweiten Parametersatzes zu überschreiben, wenn der Verbindungsaufbau mit dem zweiten Parametersatz erfolgreich war.

Somit ist die Steuereinheit selbst autorisiert, den ersten Parametersatz zu ändern. Dies wird sie jedoch nur dann vornehmen, wenn sie sicherstellen kann, dass die überschreibenden Parameter, also der zweite Parametersatz, erfolgreich für einen Verbindungsaufbau eingesetzt worden ist, d.h. mit diesem erprobterweise eine Verbindung hergestellt werden konnte, und über die eventuell auch Daten übertragen werden konnten. Dadurch ist es dem Benutzer möglich, den zweiten Parametersatz ein weiteres Mal zu ändern, z.B., wenn er hierfür bessere technische oder vertragliche Konditionen erhalten kann.

Diese Option findet vorzugsweise nach der Überprüfung des zweiten Parametersatzes auf Vollständigkeit und Richtigkeit statt, kann aber prinzipiell auch ohne eine solche vorhergehende Prüfung Anwendung finden.

Gemäß einer Ausführungsform ist die Steuereinheit eingerichtet, den zweiten Parametersatz mit Parametern des ersten Parametersatzes zu überschreiben, wenn der Verbindungsaufbau mit dem ersten Parametersatz stattgefunden hat.

Wenn die Verbindung mit dem ersten Parametersatz stattgefunden hat, bedeutet dies, dass die Verbindung mit dem zweiten Parametersatz nicht erfolgreich war. Wurde dies durch die Steuereinheit festgestellt und daraufhin eine Verbindung erfolgreich mit dem ersten Parametersatz hergestellt, wird der zweite Parametersatz verworfen bzw. mit dem ersten Parametersatz überschrieben.

Gemäß einer Ausführungsform ist das Feldgerät ein Füll- und/oder Grenzstandsensor, ein Drucksensor oder ein Durchflussmessgerät.

Das Feldgerät kann weiterhin auch ein Aktuator oder eine Steuereinheit in der industriellen Automation oder in der industriellen Prozessumgebung sein, oder kann ein weiterer industrieller Sensortyp sein.

Gemäß einer Ausführungsform ist die erste und/oder die zweite Chipkarte eine SIM-Karte für eine Mobilfunkverbindung.

Dies ist so zu verstehen, dass die erste Chipkarte eine SIM-Karte ist, unabhängig von der zweiten Chipkarte, oder umgekehrt, oder dass beide Chipkarten SIM-Karten für eine Mobilfunkverbindung sind. In dem Falle, dass sie keine SIM-Karten sind, könnten sie zum Beispiel einfache Speicherkarten sein oder Speicherkarten mit Funktionalität.

Die fest verbaute SIM-Karte ist insbesondere eine eSIM (embedded SIM) Karte. Bei einer eSIM-Karte kann z.B. der Netzbetreiber den Parametersatz, in diesem Zusammenhang auch eSIM-Profil genannt, auf die eingebettete eSIM übertragen und kann sofort verwendet werden. Durch das Übertragen kann auch ein vorheriges Profil überschrieben werden.

Gemäß einer Ausführungsform sind Parameter des ersten und des zweiten Parametersatzes Zugangsparameter für den Verbindungsaufbau, wie z.B. zu einem Mobilfunknetzwerk, einem Datennetzwerk und/oder einem Cloud-Dienst.

Die Zugangsparameter können insbesondere für eine loT-Verbindung notwendige Parameter sein. Solche Parameter sind beispielsweise Name des Zugangspunktes (AccessPointName), Benutzer (User) und Passwort (Password). Die Steuereinheit überprüft, ob diese Daten gesetzt wurden und richtig sind. Weitere Parameter können am loT Sensor direkt durch eine Vor-Ort Bedienung und/oder durch eine Bedienung mittels Cloud-Dienstes gesetzt werden.

Gemäß einem weiteren Aspekt wird ein Verfahren zur Parametrierung eines Feldgeräts für einen Verbindungsaufbau bereitgestellt, welches eine integrierte erste Chipkarte mit einem ersten Parametersatz aufweist, sowie eine Schnittstelle zu einer austauschbaren zweiten Chipkarte mit einem zweiten Parametersatz, aufweisend die folgenden Schritte: Empfangen des zweiten Parametersatzes von der zweiten Chipkarte durch die Schnittstelle, Aufbauen einer Verbindung zu einem Cloud-Dienst unter Verwendung des zweiten Parametersatzes, wenn dies möglich ist; und andernfalls Aufbauen einer Verbindung zu dem Cloud-Dienst unter Verwendung des ersten Parametersatzes.

Die Schritte des Verfahrens korrespondieren mit der Konfiguration des Feldgerätes. Daher wird für die Beschreibung der Verfahrensschritte auf die Beschreibung des Feldgerätes verwiesen sowie auf die Beschreibung der Figuren.

Gemäß einer Ausführungsform des Verfahrens weist das Feldgerät weiterhin eine Steuereinheit auf, und das Verfahren weist ferner folgende Schritte auf: Überprüfen, durch die Steuereinheit, der Vollständigkeit und/oder Richtigkeit des zweiten Parametersatzes; und Verwenden des zweiten Parametersatzes zum Aufbau der Verbindung, wenn der zweite Parametersatz vollständig und/oder richtig ist.

"Vollständig" beinhaltet hierbei auch den Fall, dass der zweite Parametersatz überhaupt vorhanden ist, das heißt auch, die Schnittstelle mit der zweiten Schnittstelle drahtlos oder galvanisch mit der der zweiten Chipkarte verbunden ist und den zweite Parametersatz erfolgreich empfangen kann.

Gemäß einer Ausführungsform weist das Verfahren weiterhin folgende Schritte auf: Ersetzen des zweiten Parametersatzes durch den ersten Parametersatz, wenn der Aufbau der Verbindung durch den ersten Parametersatz erfolgreich war; oder Ersetzen des ersten Parametersatzes durch den zweiten Parametersatz, wenn der Aufbau der Verbindung mit dem zweiten Parametersatz erfolgreich war.

Durch das Ersetzen des zweiten Parametersatzes durch den ersten Parametersatz wird die zweite Chipkarte parametriert und durch das Ersetzen des ersten Parametersatzes durch den zweiten Parametersatz die erste Chipkarte. Nachdem die Verbindung zu diesem Zeitpunkt zu einem Server bzw. einem Cloud-Dienst bereits hergestellt ist, kann die Parametrierung z.B. über den Cloud-Dienst erfolgen.

Gemäß einem weiteren Aspekt wird eine Verwendung einer ersten Chipkarte mit einem ersten Parametersatz und einer zweiten Chipkarte mit einem zweiten Chipsatz in einem Feldgerät zum Aufbau einer Verbindung unter Verwendung des ersten Parametersatz oder des zweiten Parametersatzes zu einem Cloud-Dienst.

Das heißt, dem Feldgerät stehen zwei Parametersätze zu Verfügung, aus denen das Feldgerät, genauer gesagt eine Steuereinheit des Feldgeräts, nach den hierin beschriebenen Kriterien einen Parametersatz zum Aufbauen der Verbindung auswählt.

### Kurze Beschreibung der Figuren

Im Folgenden werden Ausführungsbeispiele der Erfindung anhand der schematischen Zeichnungen näher erläutert. Hierbei zeigt
Fig. 1 ein Feldgerät;
Fig. 2 ein Ablaufdiagramm eines Verfahrens zur Parametrierung des Feldgeräts. Einander entsprechende Teile sind in allen Figuren mit den gleichen Bezugszeichen versehen.

### Ausführungsbeispiele

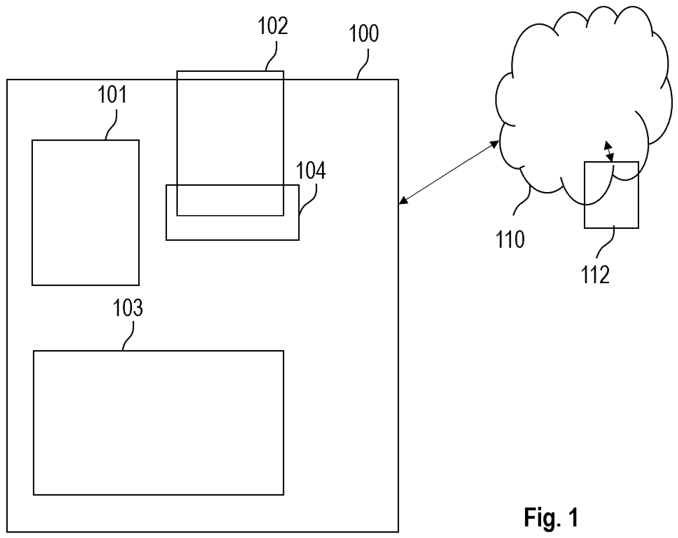

Fig. 1 zeigt ein Feldgerät 100, z.B. ein loT Sensor 100. Der loT Sensor 100 verfügt über eine erste Chipkarte 101, z.B. eine SIM-Karte 101, die fest verbaut ist. Auf der ersten Chipkarte 101 ist ein erster Parametersatz gespeichert. Zusätzlich kann eine zweite Chipkarte 102, z.B. eine beliebige SIM-Karte 102 eingesteckt werden. Auf der zweiten Chipkarte 102 ist ein zweiter Parametersatz gespeichert. Das Feldgerät 100 weist weiterhin eine Steuereinheit 103 auf.

Mit der ersten und/oder zweiten SIM Karte 101, 102 kann z.B. eine Verbindung zu einem Cloud-Dienst 112, z.B. einem loT-Server in der Cloud 110 aufgebaut werden. Das Feldgerät 100 versucht zunächst, die zweite SIM-Karte 102 mit dem dort gespeicherten zweiten Parametersatz die Verbindung aufzubauen. Wenn das Feldgerät erkennt oder feststellt, dass dies nicht möglich ist, verwendet es die erste Chipkarte 102 mit dem ersten Parametersatz. Das Feldgerät kann dies eventuell schon vor dem Verbindungsversuch, oder beim Verbindungsversuch feststellen.

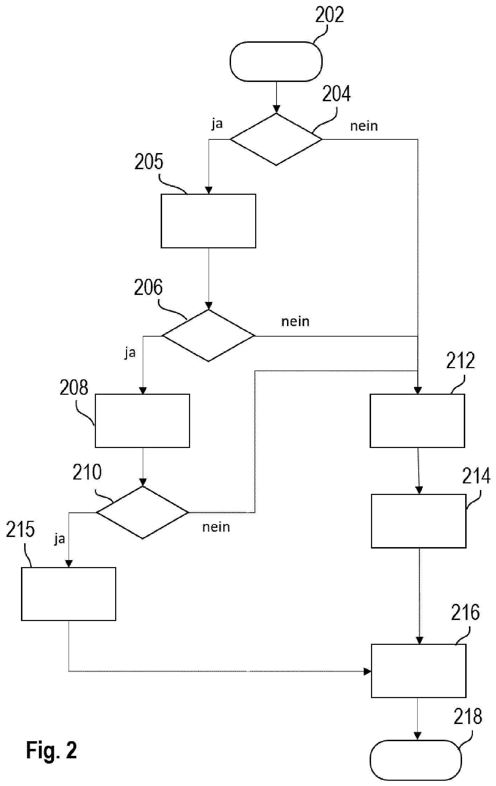

Der Zugriff auf den ersten Parametersatz ist z.B. werksseitig für einen Zugriff durch einen Benutzer gesperrt. Den zweiten Parametersatz auf der zweiten SIM-Karte 102, die mechanisch steckbar oder parametrierbar ist, kann der Kunde z.B. via NFC, Bluetooth, einer App über WLAN oder Internet, oder vor Ort über die erste SIM Karte 101 ändern oder ändern lassen, oder mechanisch durch Einstecken der zweiten SIM-Karte 102, die bereits den zweiten Parametersatz enthält. Das Eintragen der für einen Verbindungsaufbau notwendigen Parameter ist sowohl direkt am loT Sensor 100 durch eine Vor-Ort Bedienung als auch durch eine Bedienung mittels eines Cloud-Dienstes möglich. Insbesondere bei der Bedienung mittels Cloud-Dienstes kann es jedoch vorkommen, dass die notwendigen Parameter nicht korrekt eingetragen werden, so dass die Verbindung zum loT Sensor verloren geht. Durch das in Fig. 2 beschriebene Verfahren wird sichergestellt, dass eine Verbindung zu dem loT-Dienst aufgebaut werden kann, wenn der Sensor über den loT-Dienst bedient werden soll.

Fig. 2 zeigt ein Ablaufdiagramm eines Verfahrens zur Parametrierung eines Feldgeräts 100 zum Aufbau einer Verbindung zu einem Cloud-Dienst 112. Nach dem Start 202 wird die eingesteckte SIM-Karte 102 von der Steuereinheit 103 detektiert 204, d.h. geprüft, ob sie vorhanden ist. Wenn ja, empfängt die Steuereinheit 103 den zweiten Parametersatz in 205 und prüft in 206, ob alle notwendigen Parameter wie z.B. AccessPointName, User und Password gesetzt wurden. Wenn ja, wird in 208 der zweite Parametersatz verwendet, um eine Verbindung zum Cloud-Dienst 112, z.B. auf einem Cloud-Server bzw. einer App aufzubauen. In 210 wird geprüft, ob der Verbindungsaufbau erfolgreich war. Wenn ja, wird die erste Chipkarte 101 mit dem zweiten Parametersatz durch z.B. einen Cloud-Dienst mit parametriert 215 und die Messdaten können in 216 versandt werden. In 218 ist das Verfahren schließlich beendet. Fallen die Prüfungen in 204, 206 oder 210 negativ aus, wird in 212 der erste Parametersatz verwendet, um eine Verbindung zum Cloud-Dienst 112 aufzubauen, in 214 die zweite Chipkarte 102 mit dem Parametersatz der ersten Chipkarte 101 parametriert, und danach zum Schritt 216 des Messdatenversandes übergegangen.

Somit wird ein Verfahren vorgeschlagen, welches fehlgeschlagene Verbindungen detektiert und bei dem nach einem oder nach mehreren erfolglosen Versuchen eines Verbindungsaufbaus der loT Sensor 100 auf die fest verbaute SIM-Karte 101 zurückgreift. Dieses Verfahren gewährleistet somit, dass der loT Sensor 100 nie "verloren" geht. Durch die Verwendung einer eigenen SIM-Karte 102 kann der Anwender bestehende Mobilfunkverträge verwenden und ggf. Roaminggebühren umgehen.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Ein einzelner Prozessor oder eine andere Einheit kann die Funktionen mehrerer Gegenstände oder Schritte erfüllen, die in den Ansprüchen aufgeführt sind. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann.

Die Steuereinheit 103 kann Logikschaltungen wie beispielsweise ein Mikroprozessor, ein FPGA, ein ASIC, ein CPLD, etc. enthalten, die durch ein Computerprogramm definiert sein können. Das Computerprogramm kann auf einem geeigneten Medium wie einem optischen Speichermedium oder einem Halbleitermedium, das zusammen mit oder als Teil einer anderen Hardware geliefert wird, gespeichert / verteilt werden, kann aber auch in anderen Formen, beispielsweise über das Internet oder andere drahtgebundene oder drahtlose Telekommunikationssysteme verteilt sein. Bezugszeichen in den Ansprüchen sollten nicht so ausgelegt werden, dass sie den Umfang der Ansprüche begrenzen.

## Patentansprüche

1. Feldgerät (100) aufweisend:
eine integrierte erste Chipkarte (101) aufweisend einen ersten Parametersatz;
eine Schnittstelle (104) zu einer zweiten Chipkarte (102), wobei die Schnittstelle (104) eingerichtet ist, einen zweiten Parametersatz von der zweiten Chipkarte (102) zu empfangen; und
wobei das Feldgerät (100) eingerichtet ist, eine Verbindung zu einem Cloud-Dienst (112) unter Verwendung des zweiten Parametersatzes aufzubauen, wenn dies gemäß einer Überprüfung möglich ist; und andernfalls
eine Verbindung zu dem Cloud-Dienst (112) unter Verwendung des ersten Parametersatzes aufzubauen.

2. Feldgerät (100) nach Anspruch 1, aufweisend die zweite Chipkarte (102).

3. Feldgerät (100) nach Anspruch 1 oder 2, wobei der erste Parametersatz zugriffsgeschützt ist und der zweite Parametersatz von einem Benutzer anpassbar ist.

4. Feldgerät (100) nach Anspruch 1 oder 2, ferner aufweisend:
eine Steuereinheit (103), welche dazu eingerichtet ist,
den zweiten Parametersatz auf Vollständigkeit und/oder Richtigkeit zu überprüfen; und
eine Verbindung zu dem Cloud-Dienst (112) unter Verwendung des zweiten Parametersatzes aufzubauen, wenn die Überprüfung positiv ausgefallen ist, oder unter Verwendung des ersten Parametersatzes, wenn die Überprüfung negativ ausgefallen ist.

5. Feldgerät (100) nach einem der vorhergehenden Ansprüche, wobei die Steuereinheit (103) eingerichtet ist,
zu überprüfen, ob der Verbindungsaufbau zu dem Cloud-Dienst (112) unter Verwendung des zweiten Parametersatzes erfolgreich war; und
die Verbindung unter Verwendung des ersten Parametersatzes aufzubauen, wenn die Überprüfung negativ ausgefallen ist.

6. Feldgerät (100) nach einem der voranstehenden Ansprüche, wobei die Steuereinheit (103) eingerichtet ist, den ersten Parametersatz mit Parametern des zweiten Parametersatzes zu überschreiben, wenn der Verbindungsaufbau mit dem zweiten Parametersatz erfolgreich war.

7. Feldgerät (100) nach einem der Ansprüche 2 bis 6, wobei die Steuereinheit (103) eingerichtet ist, den zweiten Parametersatz mit Parametern des ersten Parametersatzes zu überschreiben, wenn der Verbindungsaufbau mit dem ersten Parametersatz stattgefunden hat.

8. Feldgerät (100) nach einem der voranstehenden Ansprüche,
wobei das Feldgerät (100) ein Füll- und/oder Grenzstandsensor, ein Drucksensor oder ein Durchflussmessgerät ist.

9. Feldgerät (100) nach einem der voranstehenden Ansprüche,
wobei die erste und/oder die zweite Chipkarte (102) SIM-Karten für eine Mobilfunkverbindung sind.

10. Feldgerät (100) nach einem der voranstehenden Ansprüche, wobei Parameter des ersten und des zweiten Parametersatzes Zugangsparameter für den Verbindungsaufbau sind.

11. Verfahren zur Parametrierung eines Feldgeräts für einen Verbindungsaufbau, welches eine integrierte erste Chipkarte (101) mit einem ersten Parametersatz aufweist, sowie eine Schnittstelle zu einer austauschbaren zweiten Chipkarte (102) mit einem zweiten Parametersatz, aufweisend die folgenden Schritte:
Empfangen (205) des zweiten Parametersatzes von der zweiten Chipkarte (102) durch die Schnittstelle (104);
Aufbauen (208) einer Verbindung zu einem Cloud-Dienst (112) unter Verwendung des zweiten Parametersatzes, wenn dies möglich ist; und andernfalls
Aufbauen (208) einer Verbindung zu dem Cloud-Dienst (112) unter Verwendung des ersten Parametersatzes.

12. Verfahren nach Anspruch 11, wobei das Feldgerät (100) weiterhin eine Steuereinheit (103) aufweist und wobei das Verfahren ferner folgende Schritte aufweist:
Überprüfen (206), durch die Steuereinheit (103), der Vollständigkeit und/oder Richtigkeit des zweiten Parametersatzes; und
Verwenden (208) des zweiten Parametersatzes zum Aufbau der Verbindung, wenn der zweite Parametersatz vollständig und/oder richtig ist.

13. Verfahren nach einem der Ansprüche 11 oder 12, ferner aufweisend den Schritt:
Ersetzen (214) des zweiten Parametersatzes durch den ersten Parametersatz, wenn der Aufbau der Verbindung durch den ersten Parametersatz erfolgreich war; oder
Ersetzen (215) des ersten Parametersatzes durch den zweiten Parametersatz, wenn der Aufbau der Verbindung mit dem zweiten Parametersatz erfolgreich war.

14. Verwendung einer ersten Chipkarte (101) mit einem ersten Parametersatz und einer zweiten Chipkarte (102) mit einem zweiten Parametersatz in einem Feldgerät (100) nach einem der Ansprüche 1 bis 10 zum Aufbau einer Verbindung unter Verwendung des ersten Parametersatz oder des zweiten Parametersatzes zu einem Cloud-Dienst (112).

## Claims

1. A field device (100) comprising:
an integrated first smart card (101) having a first set of parameters;
an interface (104) to a second smart card (102), wherein the interface (104) is arranged to receive a second set of parameters from the second smart card (102); and
wherein the field device (100) is arranged to establish a connection to a cloud service (112) using the second set of parameters if this is possible according to a check; and otherwise
to establish a connection to the cloud service (112) using the first parameter set.

2. The field device (100) according to claim 1, comprising the second smart card (102).

3. The field device (100) according to claim 1 or 2, wherein the first parameter set is access-protected and the second parameter set is customisable by a user.

4. The field device (100) according to claim 1 or 2, further comprising:
a control unit (103) which is configured to,
check the second parameter set for completeness and/or correctness; and
establish a connection to the cloud service (112) using the second parameter set if the check is positive, or using the first parameter set if the check is negative.

5. The field device (100) according to any one of the preceding claims, wherein the control unit (103) is configured to,
verify that the connection to the cloud service (112) using the second set of parameters was successful; and to
establish the connection using the first parameter set if the check is negative.

6. The field device (100) according to any one of the preceding claims, wherein the control unit (103) is configured to overwrite the first parameter set with parameters of the second parameter set if the connection setup with the second parameter set was successful.

7. The field device (100) according to any one of claims 2 to 6, wherein the control unit (103) is configured to overwrite the second parameter set with parameters of the first parameter set when the connection to the first parameter set has been established.

8. The field device (100) according to any one of the preceding claims,
wherein the field device (100) is a filling and/or limit level sensor, a pressure sensor or a flow meter.

9. The field device (100) according to any one of the preceding claims,
wherein the first and/or the second smart card (102) are SIM cards for a mobile radio connection.

10. The field device (100) according to any one of the preceding claims, wherein parameters of the first and the second parameter set are access parameters for establishing the connection.

11. A Method for parameterising a field device for establishing a connection, which has an integrated first smart card (101) with a first parameter set, as well as an interface to an exchangeable second smart card (102) with a second parameter set, comprising the following steps:
receiving (205) the second parameter set from the second smart card (102) via the interface (104);
establishing (208) a connection to a cloud service (112) using the second set of parameters, if possible; and otherwise
establishing (212) a connection to the cloud service (112) using the first set of parameters.

12. The method according to claim 11, wherein the field device (100) further comprises a control unit (103), and wherein the method further comprises the following steps:
checking (206), by the control unit (103), the completeness and/or correctness of the second set of parameters; and
use (208) the second parameter set to establish the connection if the second parameter set is complete and/or correct.

13. The method according to any one of claims 11 or 12, further comprising the step of:
replacing (214) the second parameter set with the first parameter set if the connection was successfully established by the first parameter set; or
replacing (215) the first parameter set with the second parameter set if the connection with the second parameter set was successful.

14. Use of a first smart card (101) with a first set of parameters and a second smart card (102) with a second set of parameters in a field device (100) according to any one of claims 1 to 10 for establishing a connection using the first set of parameters or the second set of parameters to a cloud service (112).

## Revendications

1. Appareil de terrain (100) comportant :
une première carte à puce intégrée (101) comportant un premier ensemble de paramètres ;
une interface (104) avec une seconde carte à puce (102), dans lequel l'interface (104) est configurée pour recevoir un second ensemble de paramètres de la seconde carte à puce (102) ; et
dans lequel l'appareil de terrain (100) est configuré pour établir une connexion à un service en nuage (112) en utilisant le second ensemble de paramètres, lorsque cela est possible d'après une vérification ; et, sinon,
pour établir une connexion au service en nuage (112) en utilisant le premier ensemble de paramètres.

2. Appareil de terrain (100) selon la revendication 1, comportant la seconde carte à puce (102).

3. Appareil de terrain (100) selon la revendication 1 ou 2, dans lequel l'accès au premier ensemble de paramètres est protégé et le second ensemble de paramètres peut être personnalisé par un utilisateur.

4. Appareil de terrain (100) selon la revendication 1 ou 2, comportant en outre :
une unité de commande (103) qui est configurée de manière à
vérifier l'intégralité et/ou l'exactitude du second ensemble de paramètres ; et
établir une connexion au service en nuage (112) en utilisant le second ensemble de paramètres lorsque la vérification est positive ou en utilisant le premier ensemble de paramètres lorsque la vérification est négative.

5. Appareil de terrain (100) selon l'une des revendications précédentes, dans lequel l'unité de commande (103) est configurée pour
vérifier si l'établissement d'une connexion au service en nuage (112) en utilisant le second ensemble de paramètres a réussi ; et
établir la connexion en utilisant le premier ensemble de paramètres lorsque la vérification est négative.

6. Appareil de terrain (100) selon l'une des revendications précédentes, dans lequel l'unité de commande (103) est configurée pour écraser le premier ensemble de paramètres avec des paramètres du second ensemble de paramètres lorsque l'établissement d'une connexion avec le second ensemble de paramètres a réussi.

7. Appareil de terrain (100) selon l'une des revendications 2 à 6, dans lequel l'unité de commande (103) est configurée pour écraser le second ensemble de paramètres avec des paramètres du premier ensemble de paramètres lorsque l'établissement d'une connexion avec le premier ensemble de paramètres a eu lieu.

8. Appareil de terrain (100) selon l'une des revendications précédentes,
dans lequel l'appareil de terrain (100) est un capteur de niveau de remplissage et/ou de niveau de seuil, un capteur de pression ou un débitmètre.

9. Appareil de terrain (100) selon l'une des revendications précédentes,
dans lequel la première et/ou la seconde carte à puce (102) sont des cartes SIM pour une connexion de téléphonie mobile.

10. Appareil de terrain (100) selon l'une des revendications précédentes, dans lequel des paramètres des premier et second ensembles de paramètres sont des paramètres d'accès pour l'établissement d'une connexion.

11. Procédé pour paramétrer un appareil de terrain afin d'établir une connexion, qui comporte une première carte à puce intégrée (101) avec un premier ensemble de paramètres, ainsi qu'une interface avec une seconde carte à puce (102) interchangeable avec un second ensemble de paramètres, comportant les étapes suivantes consistant à :
recevoir (205) le second ensemble de paramètres de la seconde carte à puce (102) via l'interface (104) ;
établir (208) une connexion à un service en nuage (112) en utilisant le second ensemble de paramètres lorsque cela est possible ; et sinon
établir (212) une connexion au service en nuage (112) en utilisant le premier ensemble de paramètres.

12. Procédé selon la revendication 11, dans lequel l'appareil de terrain (100) comporte en outre une unité de commande (103) et dans lequel le procédé comporte en outre les étapes suivantes consistant à :
vérifier (206), par l'unité de commande (103), l'intégralité et/ou l'exactitude du second ensemble de paramètres ; et
utiliser (208) le second ensemble de paramètres pour établir la connexion lorsque le second ensemble de paramètres est intégral et/ou exact.

13. Procédé selon l'une des revendications 11 ou 12, comportant en outre l'étape consistant à :
remplacer (214) le second ensemble de paramètres par le premier ensemble de paramètres lorsque l'établissement de la connexion avec le premier ensemble de paramètres a réussi ; ou remplacer (215) le premier ensemble de paramètres par le second ensemble de paramètres lorsque l'établissement de la connexion avec le second ensemble de paramètres a réussi.

14. Utilisation d'une première carte à puce (101) avec un premier ensemble de paramètres et d'une seconde carte à puce (102) avec un second ensemble de paramètres dans un appareil de terrain (100) selon l'une des revendications 1 à 10 pour établir une connexion à un service en nuage (112) en utilisant le premier ensemble de paramètres ou le second ensemble de paramètres.
